(19) **Europäisches Patentamt**
**European Patent Office**
**Office européen des brevets**

(11) **EP 0 992 818 B1**

(12) **FASCICULE DE BREVET EUROPEEN**

(45) Date de publication et mention
de la délivrance du brevet:
**15.04.2009  Bulletin 2009/16**

(51) Int Cl.:
*G02B 6/02* *(2006.01)*     *G02B 6/036* *(2006.01)*

(21) Numéro de dépôt: **99402434.7**

(22) Date de dépôt: **05.10.1999**

(54) **Fibre optique à dispersion décalée avec dipersion positive à 1550 nm**

Dispersionsverschobene optische Faser mit positiver Dispersion bei 1550 nm

Dispersion shifted optical fiber with positive dispersion at 1550 nm

(84) Etats contractants désignés:
**AT BE CH CY DE DK ES FI FR GB GR IE IT LI LU MC NL PT SE**

(30) Priorité:  **05.10.1998  FR 9812432**

(43) Date de publication de la demande:
**12.04.2000  Bulletin 2000/15**

(73) Titulaire: **Draka Comteq B.V.**
**1083 HJ  Amsterdam (NL)**

(72) Inventeurs:
• **Rousseau, Jean-Claude**
**78400 Chatou (FR)**
• **Paillot, Marianne**
**92600 Asnieres (FR)**

(74) Mandataire: **Blokland, Arie**
**Algemeen Octrooi- en Merkenbureau,**
**P.O. Box 645**
**5600 AP  Eindhoven (NL)**

(56) Documents cités:
**EP-A- 0 026 937**     **EP-A- 0 260 795**
**EP-A- 0 626 768**     **EP-A- 0 737 873**
**EP-A- 0 851 245**     **EP-A- 0 938 001**
**WO-A-98/49586**     **GB-A- 2 102 146**
**GB-A- 2 118 321**

• **SAFAAI-JAZI A ET AL: "EVALUATION OF CHROMATIC DISPERSION IN W-TYPE FIBERS" OPTICS LETTERS,US,OPTICAL SOCIETY OF AMERICA, WASHINGTON, vol. 14, no. 14, page 760-762 XP000071123 ISSN: 0146-9592**

EP 0 992 818 B1

**Description**

La présente invention concerne le domaine des fibres optiques, et plus précisément les fibres optiques à dispersion décalée destinée à être utilisées pour système de transmissions à multiplexage en longueur d'onde.

Les fibres optiques monomodes dites à dispersion décalée (DSF, acronyme de "dispersion shifted fibers") sont telles qu'à la longueur d'onde de transmission à laquelle elles sont utilisées, qui est en général différente de la longueur d'onde de 1,3 $\mu$m pour laquelle la dispersion de la silice est sensiblement nulle, la dispersion chromatique de l'onde transmise est sensiblement nulle; c'est-à-dire que la dispersion chromatique de la silice, non nulle, est compensée - d'où l'emploi du terme décalé - par une augmentation de l'écart d'indice $\Delta n$ entre le coeur de la fibre et la gaine optique. Cet écart d'indice permet de décaler la longueur d'onde pour laquelle la dispersion chromatique est nulle; il est obtenu par l'introduction de dopants dans la fibre, lors de la fabrication de celle-ci, par exemple par un processus de MCVD connu en soi, et qui n'est pas décrit plus en détail ici. Les termes de gaine et de coeur sont connus de l'homme du métier; classiquement on appelle gaine la partie qui s'étend jusqu'à un diamètre de 125 $\mu$m. Le coeur correspond à la partie où environ 70% de l'énergie lumineuse se propage.

Ainsi qu'il est bien connu de l'homme du métier, les fibres DSF sont en général différentes des fibres classiques à saut d'indice, que l'on appelle NDSF, acronyme de "non - dispersion shifted fibers ", mais aussi des fibres à dispersion plates, ou "dispersion-flattened fibers" en anglais, qui présentent une dispersion chromatique faible sur une plage de lon0gueur d'onde comprise entre 1310 et 1550 nm, et qui sont telles qu'elles ont en général deux valeurs de dispersion chromatique nulle dans la plage considérée.

De nombreux profils d'indice ont été proposés pour de telles fibres optiques monomodes à dispersion décalée. Le profil d'indice est généralement qualifié par la courbe représentant la variation de l'indice de réfraction en fonction du rayon de la fibre. On représente de façon classique sur les abscisses la distance r au centre de lci fibre, et sur les ordonnées l'indice de réfraction, défini par sa différence par rapport à l'indice de la gaine de la fibre, en différence absolue ($\Delta n$) ou en pour cent (%$\Delta$). La définition de la différence relative entre l'indice $n_1$ et l'indice $n_c$ de la fibre s'écrit :

$$\%\Delta = 100.(n_1{}^2 - n_c{}^2)/2n_1{}^2.$$

Cette différence relative est sensiblement égale, au vu des faibles différences entre les indices à la quantité $(n_1 - n_c)/n_c$; on utilise donc couramment l'approximation %$\Delta = \Delta n/n_c$, avec $n_c$ l'indice de la silice.

On parle ainsi de profil d'indice en "échelon", en "trapèze" ou en "triangle" pour des courbes représentatives de la variation de l'indice en fonction du rayon qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent. A titre d'exemple, US-A-5 659 649 montre un profil de consigne en trapèze avec anneau, et le profil de consigne différent obtenu lors de la fabrication de la fibre.

Les fibres monomodes doivent en outre présenter de préférence des caractéristiques qui correspondent aux exigences des câbliers et des systémiers: d'une part les câbliers recherchent une bonne "câblabilité", autrement dit, recherchent que la mise en câble de la fibre n'induise pas ou peu d'atténuation supplémentaire. Une solution pour cela consiste à réduire le diamètre de mode de la fibre. D'autre part, les systémiers souhaitent une aire effective importante, une valeur appropriée de la longueur d'onde $\lambda_0$ de dispersion nulle. De plus, il est apparu récemment un intérêt pour les fibres dites NZ-DSF, acronyme de "non-zero dispersion shifted fiber", qui sont des fibres à dispersion décalée pour lesquelles la dispersion chromatique à 1550 nm est différente de zéro.

Le brevet US-A-5.327.516 décrit une fibre optique à dispersion décalée, qui se propose de réduire les effets non linéaires en introduisant une faible pente de dispersion chromatique aux longueurs d'onde considérées, la valeur de la dispersion chromatique auxdites longueurs d'onde étant en général comprise entre 1 et 4 ps/nm.km.

Or une telle fibre présente encore des effets non linéaires, comme le phénomène du mélange à quatre ondes, importants. C'est pourquoi il est apparu à EP 0 938 001 décrit une fibre optique à dispersion décalée, comprenant un coeur et une gaine, avec un profil d'indice de forme consistant en une partie centrale en rectangle entourée d'une partie annulaire d'indice inférieur à l'indice de la gaine puis de la gaine, avec une dispersion chromatique nulle pour une valeur $\lambda_0$ de longueur d'onde comprise entre 1350 et 1450 nm, en particulier 1400 nm, et avec une dispersion chromatique de 1-8 ps/nm.km à 1550 nm.

la demanderesse qu'il était souhaitable de disposer d'une fibre à dispersion décalée minimisant les effets non linéaires.

L'invention propose donc un nouveau type de fibre à dispersion décalée, possédant avantageusement une perte en dB/km réduite, une pente de dispersion chromatique faible et une valeur de la dispersion chromatique à 1550 nm suffisamment importante. Une telle fibre permet de limiter au maximum les effets non linéaires par rapport aux fibres NZ-SF de l'art antérieur.

Plus précisément, l'invention propose une fibre optique à dispersion décalée, comprenant un cour et une gaine, avec un profil d'indice de forme consistant en une partie centrale en rectangle entourée directement d'une partie annulaire d'indice inférieur à l'indice de la gaine puis de la gaine, avec une dispersion chromatique nulle pour unie valeur $\lambda_0$ de longueur d'onde comprise entre 1380 et 1450 nm, et avec une dispersion chromatique à 1550 nm comprise entre 9 et 11 ps/nm.km.

Dans un mode de réalisation, la fibre présente une dispersion chromatique nulle pour une valeur $\lambda_0$ de longueur d'onde comprise entre 1400 et 1440 nm, généralement et de façon préférée voisine de 1400 à 1420 nm.

Avantageusement, la fibre présente une aire efficace de l'ordre de 50 $\mu m^2$.

Dans un mode de réalisation, la fibre présente une longueur d'onde de coupure inférieure à 1310 nm

Dans un autre mode de réalisation, la fibre présente un diamètre de mode à 1550 nm entre 7,5 et 8,5 $\mu m$.

la fibre selon l'invention présente une dispersion chromatique à 1550 nm comprise entre 9 et 1 ps/nm.km, généralement et de façon préférée voisine de 10 ps/nm.km.

De préférence, la fibre présente une pente de dispersion chromatique inférieure à 0,06 ps/nm$^2$.km à 1550 nm.

De façon préférée, la fibre présente une atténuation inférieure à 0,25 dB/km à 1550 nm.

Ladite partie centrale en rectangle selon l'invention présente un indice dont la différence avec l'indice de la gaine est généralement compris entre $6.10^{-3}$ et $9.10^{-3}$.

Ladite partie centrale en rectangle selon l'invention s'étend jusqu'à un rayon compris entre 2,8 et 3,2 $\mu m$.

Ladite partie annulaire selon l'invention présente un indice dont la différence avec l'indice de la gaine est comprise entre $-0,3.10^{-3}$ et $-1,3.10^{-3}$.

Cette partie annulaire s'étend avantageusement jusqu'à un rayon au moins égal à six fois le rayon de ladite partie centrale.

L'invention propose aussi une utilisation d'une telle fibre dans un système de transmissions à multiplexage en longueur d'onde.

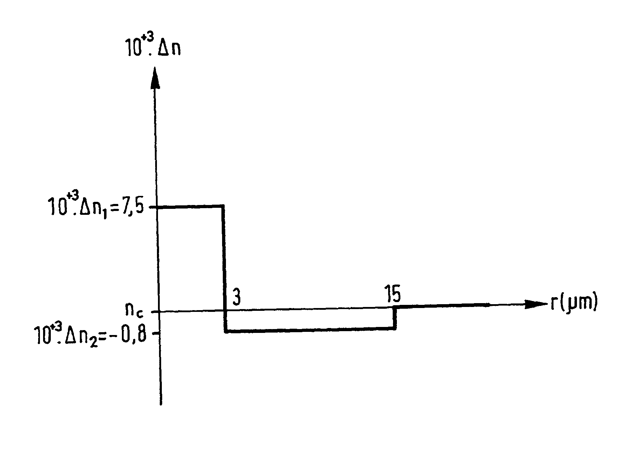

D'autres caractéristiques et avantages de l'invention apparaîtront à la lecture de la description qui suit de modes de réalisation de l'invention, donnée à titre d'exemple et en référence à la figure, qui montre une représentation schématique du profil d'indice d'une fibre selon l'invention.

L'invention repose sur la constatation surprenante qu'une telle fibre est appropriée pour des systèmes de transmission à multiplexage en longueur d'ondes. En effet, elle s'avère présenter une pente de dispersion faible dans la plage de longueurs d'onde utilisée pour les transmissions à multiplexage en longueur d'onde, typiquement entre 1530 et 1580 nm. En outre, l'annulation de la dispersion chromatique autour de 1400 à 1420 nm assure que la dispersion chromatique dans la plage de longueurs d'onde du multiplex présente une valeur suffisante pour limiter les effets non linéaires, et notamment le mélange à quatre ondes.

L'invention propose donc d'utiliser comme fibre de ligne une fibre à profil d'indice avec une partie centrale en rectangle entourée d'une partie annulaire d'indice inférieur à l'indice de la gaine puis d'une gaine, qui présente de préférence une pente de dispersion chromatique dC/d$\lambda$ inférieure ou égale à 0,06 ps/nm$^2$.km dans la plage du multiplex, ou autour de 1550 nm. En outre, la dispersion chromatique de la fibre s'annule entre 1380 et 1450 nm, par exemple autour de $\lambda_0$ = 1400 ou 1420 nm, de sorte que la fibre présente une dispersion forte dans la plage du multiplex. Avantageusement, l'aire efficace $A_{eff}$ de la fibre est de l'ordre de 50 $\mu m^2$, par exemple dans une plage de 40 à 60 $\mu m^2$. De préférence, l'atténuation est inférieure à 0,25 dB/km à 1550 nm.

La figure montre une représentation schématique d'un profil d'indice, qui peut être utilisé pour obtenir les caractéristiques de l'invention. Le profil d'indice de la figure est un profil avec une partie centrale en rectangle d'indice supérieur à celui de la gaine, et autour de cette partie centrale, une partie annulaire d'indice inférieur à celui de la gaine. En partant du centre de la fibre vers la gaine, la partie centrale présente un indice $n_1$ sensiblement constant, jusqu'à un rayon a1. Dans le mode de réalisation de la figure, la différence $\Delta n_1$ entre l'indice $n_1$ et l'indice $n_c$ de la gaine vaut $7,5.10^{-3}$, et le rayon $\alpha_1$ vaut 3 $\mu m$. Des valeurs d'indice $\Delta n_1$ dans une plage de $6.10^{-3}$ à $9.10^{-3}$ sont appropriées; la valeur du rayon $\alpha_1$ peut sans problèmes varier de 2,8 à 3,2 $\mu m$.

Autour de cette partie centrale d'indice supérieur à celui de la gaine, la fibre présente une partie annulaire d'indice inférieur à celui de la gaine, entre les rayons $\alpha_1$ et $\alpha_2$. Dans le mode de réalisation de la figure, la différence $\Delta n_2$ entre l'indice de cette partie annulaire et l'indice de la gaine vaut $-0,8.10^{-3}$, et la partie annulaire s'étend sur une épaisseur de 15 $\mu m$. Plus généralement, des valeurs de $\Delta n_2$ dans une plage de $-0,3.10^{-3}$ à $-1,3.10^{-3}$ conviennent, et le rayon externe $\alpha_2$ de la partie annulaire est choisi de sorte à être égal à au moins six fois le rayon de la partie centrale du coeur, soit

$$\alpha_2/\alpha_1 = 6$$

Un tel exemple de profil permet d'obtenir une atténuation à 1550 nm inférieure à 0,25 dB/km, un diamètre de mode $W_{02}$ à 1550 nm de l'ordre de 8 $\mu m$, plus généralement entre 7,5 et 8,5 $\mu m$, et une aire effective de l'ordre de 50 $\mu m^2$. En outre, la fibre présente une longueur d'onde de coupure $\lambda_c$ en dessous de 1310 nm. La dispersion chromatique à 1550 nm est comprise entre 8 et 12 ps/nm.km; pour cette même valeur de longueur d'onde, la pente de dispersion chromatique est de l'ordre de 0,05 à 0,06 ps/nm$^2$.km.

Les fibres du genre de celle de la figure peuvent être fabriquées par l'homme du métier à l'aide de techniques connues, comme le MCVD ou les autres techniques couramment utilisées pour la fabrication des fibres optiques.

Bien entendu, la présente invention n'est pas limitée aux exemples et modes de réalisation décrits et représentés, mais elle est susceptible de nombreuses variantes accessibles à l'homme de l'art.

## Revendications

1. Fibre optique à dispersion décalée, comprenant un coeur et une gaine, avec un profil d'indice de forme consistant en une partie centrale en rectangle entourée directement d'une partie annulaire d'indice inférieur à l'indice de la gaine puis de la gaine, avec une dispersion chromatique nulle pour une voleur $\lambda_0$ de longueur d'onde comprise entre 1380 et 1450 nm, ladite partie centrale en rectangle présentant un indice dont la différence avec l'indice de la gaine est compris entre $6.10^{-3}$ et $9.10^{-3}$, l'indice de la gaine étant celui de la silice et ladite partie centrale en rectangle s'étendant jusqu'à un rayon compris entre 2,8 et 3,2 $\mu$m **caractérisée en ce qu'**elle présente une dispersion chromatique à 1550 nm comprise entre 9 et 11 ps/nm.km, et ladite partie annulaire présentant un indice dont la différence avec l'indice de la gaine est comprise entre $-0,3.10^{-3}$ et $-1,3.10^{-3}$.

2. Fibre selon la revendication 1 présentant une dispersion chromatique nulle pour une valeur $\lambda_0$ de longueur d'onde comprise entre 1400 et 1440 nm.

3. Fibre selon l'une des revendications 1 ou 2, présentant une aire efficace de l'ordre de 50 $\mu$m$^2$.

4. Fibre selon l'une des revendications 1, 2 ou 3, présentant une longueur d'onde de coupure inférieure à 1310 nm.

5. Fibre selon l'une des revendications 1 à 4, présentant un diamètre de mode à 1550 nm entre 7,5 et 8,5 $\mu$m.

6. Fibre selon l'une des revendications 1 à 5 présentant une pente de dispersion chromatique inférieure à 0,06 ps/nm$^2$.km à 1550 nm.

7. Fibre selon l'une des revendications 1 à 5, présentant une atténuation inférieure à 0,25 dB/ km à 1550 nm.

8. Fibre selon l'une des revendications 1 à 7 telle que ladite partie annulaire s'étend jusqu'à un rayon au moins égal à six fois le rayon de ladite partie centrale.

9. Utilisation de la fibre selon l'une des revendications 1 à 8 dans un système de transmissions à multiplexage en longueur d'onde.

## Claims

1. Dispersion-shifted optical fibre, comprising a core and a cladding, having an index profile of a shape consisting of a central rectangular portion surrounded directly by an annular portion having an index less than the index of the cladding and then by the cladding, having zero chromatic dispersion for a wavelength value $\lambda_0$ between 1380 and 1450 nm inclusive, said central rectangular portion having an index whose difference from the index of the cladding is between $6 \times 10^{-3}$ and $9 \times 10^{-3}$ inclusive, the index of the cladding being that of silica, and said central rectangular portion extending up to a radius of between 2.8 and 3.2 $\mu$m inclusive, **characterised in that** it has a chromatic dispersion at 1550 nm of between 9 and 11 ps/nm.km inclusive, and said annular portion having an index whose difference from the index of the cladding is between $-0.3 \times 10^{-3}$ and $-1.3 \times 10^{-3}$ inclusive.

2. Fibre according to claim 1, having zero chromatic dispersion for a wavelength value $\lambda_0$ between 1400 and 1440 nm inclusive.

3. Fibre according to one of claims 1 or 2, having an effective area of the order of 50 $\mu$m$^2$.

4. Fibre according to one of claims 1, 2 or 3, having a cut-off wavelength less than 1310 nm.

5. Fibre according to one of claims 1 to 4, having a mode diameter at 1550 nm of between 7.5 and 8.5 $\mu$m.

6. Fibre according to one of claims 1 to 5, having a chromatic dispersion slope less than 0.06 ps/nm$^2$.km at 1550 nm.

7. Fibre according to one of claims 1 to 5, having an attenuation of less than 0.25 dB/km at 1550 nm.

8. Fibre according to one of claims 1 to 7, wherein said annular portion extends up to a radius equal to at least six times the radius of said central portion.

9. Use of the fibre according to one of claims 1 to 8 in a wavelength multiplexing transmission system.

## Patentansprüche

1. Dispersionsverschobene optische Faser mit einem Kern und einer Umhüllung mit einem Form-Indexprofil, das aus einem rechteckigen Mittelteil besteht, welches direkt von einem ringförmigen Teil umgeben ist, das einen kleineren Index aufweist als der Index der Umhüllung, und anschließend von der Umhüllung, mit einer chromatischen Nulldispersion bei einem Wert $\lambda_0$ der Wellenlänge zwischen 1380 und 1450 nm, wobei der rechteckige Mittelteil einen Index besitzt, dessen Differenz zu dem Index der Umhülling zwischen $6.10^{-3}$ und $9.10^{-3}$ liegt, wobei es sich bei dem Index der Umhülling um den von Siliziumdioxid handelt, und der rechteckige Mittelteil sich bis zu einem Strahl zwischen 2,8 und 3,2 $\mu$m erstreckt, **dadurch gekennzeichnet, dass** sie eine chromatische Dispersion bei 1550 nm zwischen 9 und 11 ps/nm.km aufweist, und der ringförmige Teil einen Index aufweist, dessen Differenz zu dem Index der Umhülling zwischen $-0,3.10^{-3}$ und $-1,3.10^{-3}$ liegt.

2. Faser nach Anspruch 1 mit einer chromatischen Nulldispersion bei einem Wert $\lambda_0$ der Wellenlänge zwischen 1400 und 1440 nm.

3. Faser nach einem der Ansprüche 1 oder 2, die eine Nutzfläche in der Größenordnung von 50 $\mu$m$^2$ besitzt.

4. Faser nach einem der Ansprüche 1, 2 oder 3, die eine Grenzwellenlänge von weniger als 1310 nm aufweist.

5. Faser nach einem der Ansprüche 1 bis 4, die bei 1550 nm einen Mode-Durchmesser zwischen 7,5 und 8,5 $\mu$m besitzt.

6. Faser nach einem der Ansprüche 1 bis 5, die eine chromatische Dispersionsneigung von weniger als 0,06 ps/nm$^2$.km bei 1550 nm aufweist.

7. Faser nach einem der Ansprüche 1 bis 5, die eine Dämpfung von weniger als 0,25 dB/km bei 1550 nm besitzt.

8. Faser nach einem der Ansprüche 1 bis 7, bei welcher der ringförmige Teil bis zu einem Strahl verläuft, der mindestens sechs (6) Mal den Strahl des Mittelteils beträgt.

9. Verwendung der Faser nach einem der Ansprüche 1 bis 8 in einem Wellenlängen-Multiplexing-Übertragungssystem.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5659649 A
- US 5327516 A
- EP 0938001 A